# EUROPEAN PATENT SPECIFICATION

(11) **EP 3 617 146 B1**
(45) Date of publication and mention of the grant of the patent: **26.10.2022**
(21) Application number: 19194328.1
(22) Date of filing: 29.08.2019
(51) Int. Cl.: C01G 23/00, C01G 23/053, C01G 23/08, H01M 4/48, H01M 4/485, H01M 10/0525

(54) **LINEAR POROUS TITANIUM DIOXIDE MATERIAL AND PREPARATION AND USE THEREOF**
LINEARES PORÖSES TITANDIOXIDMATERIAL SOWIE HERSTELLUNG UND VERWENDUNG DAVON
MATÉRIAU POREUX LINÉAIRE DE DIOXYDE DE TITANE, SA PRÉPARATION ET SON UTILISATION

(30) Priority: 30.08.2018 CN 201811001842
(43) Date of publication of application: 04.03.2020
(73) Proprietor: PetroChina Company Limited, Dongcheng District Beijing 100007 (CN)
(72) Inventor: Li, Jianming, Beijing City, 100724 (CN); Jin, Xu, Beijing City, 100724 (CN); Wang, Xiaoqi, Beijing City, 100724 (CN); Liu, Xiaodan, Beijing City, 100724 (CN); Jiao, Hang, Beijing City, 100724 (CN); Sun, Liang, Beijing City, 100724 (CN); Su, Ling, Beijing City, 100724 (CN)
(74) Representative: Hoffmann Eitle

(56) References cited:
- CN-A- 109 326 791
- US-A1- 2013 102 458
- MIAO YIGAO ET AL: "Synthesis of {010}-faceted cuboid-like anatase TiO2nanorods by the hydrothermal method", MICRO AND NANO LETTERS, THE INSTITUTION OF ENGINEERING AND TECHNOLOGY, MICHAEL FARADAY HOUSE, SIX HILLS WAY, STEVENAGE, HERTS. SG1 2AY, UK, vol. 6, no. 10, 31 October 2011 (2011-10-31), pages 848-851, XP006042113, DOI: 10.1049/MNL.2011.0484
- WEIGUANG YANG ET AL: "Three-dimensional self-branching anatase TiO 2 nanorods: morphology control, growth mechanism and dye-sensitized solar cell application", JOURNAL OF MATERIALS CHEMISTRY A, vol. 2, no. 38, 1 January 2014 (2014-01-01), pages 16030-16038, XP055648276, GB ISSN: 2050-7488, DOI: 10.1039/C4TA02761B
- HAN XIGUANG ET AL: "Facile preparation of hybrid anatase/rutile TiO2nanorods with exposed (010) facets for lithium ion batteries", MATERIALS CHEMISTRY AND PHYSICS, ELSEVIER SA, SWITZERLAND, TAIWAN, REPUBLIC OF CHINA, vol. 171, 30 December 2015 (2015-12-30), pages 11-15, XP029401950, ISSN: 0254-0584, DOI: 10.1016/J.MATCHEMPHYS.2015.11.048

## Description

### Technical Field

The invention relates to a linear porous titanium dioxide material and the preparation and use thereof, which pertains to the field of semi-conductive functional materials and material preparation.

### Background

Titanium dioxide is a hot research topic in the field of materials due to its broad application prospects in water photolysis, catalysis, photocatalysis, lithium ion batteries, sodium ion batteries, potassium ion batteries, dye-sensitized solar cells and sensors, etc.

The applied properties of anatase phase titanium dioxide are closely related to its morphology. For example, as compared to titanium dioxide nanoparticles, the linear structure of titanium dioxide nanomaterials can reduce the grain boundary between particles and facilitate the transport of carriers in the long axis direction, which has the following advantages: (1) in the field of photocatalysis, the linear structure facilitates the free migration of photogenerated electron-hole pairs in the long axis direction, reduces the probability of electron-hole recombination, and improves the photocatalytic efficiency; (2) in the field of battery electrode materials, the linear long axis is beneficial to effective electron migration, while the short axis facilitates the rapid intercalation and deintercalation of lithium, sodium, or potassium ions, and the linear structure has better charging and discharging performance than the nanoparticles; (3) in the field of dye-sensitized solar cell, the linear structure can reduce the grain boundary between particles, which facilitates the transport of electrons on the photo-anode and greatly improves battery efficiency.

Both experimental and theoretical calculations show that the highly-active {100} and {001} crystal planes have higher crystal plane energy than the {101} crystal plane. Anatase phase titanium dioxide with highly-active crystal planes (such as the {100} or {001} crystal plane) exposed can exhibit better applied effects such as photocatalysis. A thermodynamically-stable anatase phase titanium dioxide tends to form a small number of truncated octahedral particles, i.e., particles consisted of eight low activity {101} crystal planes and two highly-active {001} crystal planes. Among them, the {101} crystal planes accounts for as high as up to 94% and tends to easily vanish in the growing process of the material, primarily due to the properties including high activity and low stability of the high-activity crystal planes. Therefore, it is very likely that the {101} crystal plane with low activity of the anatase phase titanium dioxide is exposed in the growing process to form octahedral particles. Currently, nothing has been reported on linear anatase phase titanium dioxide materials having a large proportion of active {100} and {001} crystal planes.

In addition, porous titanium dioxide materials have a large specific surface area and a high porosity which provide them with many excellent properties in application. The specific surface area and active sites of porous titanium dioxide may increase drastically, which greatly accelerates reaction on its surface and its interaction with media, and improves the applied properties of the material. A titanium dioxide material with a porous structure has high light absorption and light scattering utilization, and, in general, anatase phase titanium dioxide having a porous structure exhibits high photocatalytic efficiency. However, the porous titanium dioxide materials reported insofar are in granular forms, such as porous spheres, porous crystalline nanoparticles, having a large grain boundary, and may easily become a recombination center of photogenerated electron-holes.

US 20130102458A1 relates to nanomaterials and assemblies including a micrometerscale spherical aggregate comprising: a plurality of one-dimensional nanostructures comprising titanium and oxygen, wherein the one-dimensional nanostructures radiate from a hallow central core thereby forming a spherical aggregate.

### Summary of the Invention

In order to solve the above technical problems, an objective of the present invention is to provide a linear porous titanium dioxide material and the preparation method thereof, by which an anatase phase titanium dioxide nanomaterial having a linear, porous, single crystal structure with active crystal planes structure is obtained by combining a linear structure, a single crystal structure, a porous structure, active {100} and {001} crystal planes, thereby greatly increasing the specific surface area of the material, enhancing the surface activity of the material, reducing the grain boundary between particles, improving effective carrier transport in the long axis direction, and enhancing the applied properties of the material.

In order to achieve the above objective, the present invention provides a linear porous titanium dioxide material which is as defined in the claims.

According to a particular embodiment of the present invention, the linear porous titanium dioxide material is consisted of many small particles. Preferably, the linear porous titanium dioxide material (a structure of an assembly of the particles) has a structure of one or more rectangular columns which have flat side surfaces that are perpendicular to each other.

According to a particular embodiment of the present invention, preferably, the side surfaces of the linear porous titanium dioxide material are highly-active anatase phase {100} and {001} crystal planes.

According to a particular embodiment of the present invention, the linear porous titanium dioxide material has a linear structure having a diameter of 20 nm to 5 µm and preferably has a length of 1 µm to 50 µm; more preferably, the linear porous titanium dioxide material has a linear structure having a diameter of 100 nm to 1,000 nm and a length of 5 µm to 20 µm. The pores in the linear porous structure of the linear porous titanium dioxide material have a size of 5 nm to 20 nm.

The long-axis of the single crystal of the linear porous titanium dioxide material is oriented in the <010> direction.

The linear porous titanium dioxide material provided by the present invention has a structure that may improve the application effect of the titanium dioxide material in the fields of battery electrodes, catalysis, photocatalysis, sensing, solar cells, hydrophilicity and hydrophobicity or biology.

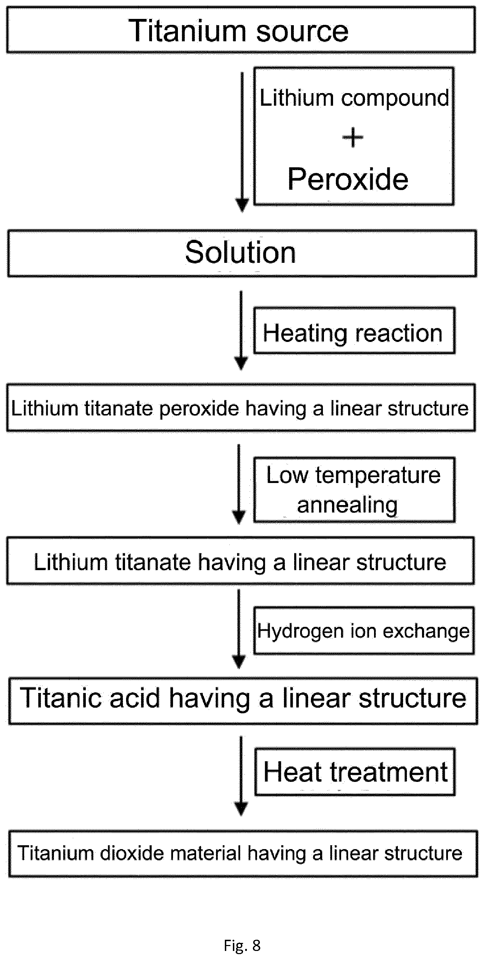

The present invention also provides a method of preparing the above-mentioned linear porous titanium dioxide material, with the procedure thereof shown in Fig. 8. This preparation method comprises the steps of:
dispersing a titanium source in an aqueous solution of a peroxide containing a lithium compound under stirring to form a solution; the concentration of the lithium compound is 0.4 to 1.0 mol/L; the concentration of the peroxide is 0.1 to 2.0 mol/L
subjecting the solution to a heating reaction to obtain lithium titanate peroxide having a linear structure; the temperature of the heating reaction is 60 to 100°C; and the duration of the heating reaction is 0.5 to 24 hours;
subjecting the lithium titanate peroxide to a low temperature annealing treatment to obtain lithium titanate having a linear structure; the temperature of the low temperature annealing treatment is 150 to 250°C;
dispersing the lithium titanate in an acid solution for hydrogen ion exchange to obtain titanic acid having a linear structure;
subjecting the titanic acid to heat treatment to obtain the linear porous titanium dioxide material; the heat treatment includes hydrothermal treatment and/or high temperature annealing; the temperature of the high temperature annealing is 300 to 1000°C.

In the above preparation method, preferably, a polymer is added to the solution while the titanium source is being dispersed in an aqueous solution of a peroxide containing a lithium compound under stirring to form a solution.

The polymer used is one or more selected from chitosan, guar gum, methyl cellulose, ethyl cellulose, hydroxyethyl cellulose, hydroxypropyl cellulose, hydroxypropyl methyl cellulose, polyvinyl alcohol, polyacrylamide, polyethylene oxide, polyethylene glycol or polyvinylpyrrolidone. In the above-mentioned solution, the amount of polymer added may be controlled at 100 ppm to 100,000 ppm, more preferably 1,000 ppm to 10,000 ppm. The polymer may be added in the form of a solid or an aqueous solution.

In the above preparation method, preferably, the titanium source is one or more selected from titanium ethoxide, titanium propoxide, tetrabutyl titanate, titanium glycolate, titanium glyceroxide, titanium sulfate, titanium oxysulfate, titanium tetrachloride, titanium tetrafluoride, ammonium fluorotitanate, titanium nitride, titanium dioxide, metatitanic acid or orthotitanic acid.

In the above preparation method, the titanium source may also be titanic acid hydrate; and the titanic acid hydrate is obtained by a hydrolysis reaction of a titanium-containing compound. The titanium-containing compound may be one or more selected from titanium ethoxide, titanium propoxide, tetrabutyl titanate, titanium glycolate, titanium glyceroxide, titanium sulfate, titanium oxysulfate, titanium tetrachloride, titanium tetrafluoride, ammonium fluorotitanate or industrial titanium-containing compounds. Here, the hydrolysis reaction is conducted by dispersing the titanium-containing compound in pure water for direct hydrolysis to produce the titanic acid hydrate; alternatively, the hydrolysis reaction is conducted by dispersing the titanium-containing compound in an aqueous solution containing an alkali substance for hydrolysis to produce the titanic acid hydrate. The alkali substance is one or more selected from aqueous ammonia, sodium hydroxide, potassium hydroxide, tetramethylammonium hydroxide, tetraethylammonium hydroxide, tetrapropylammonium hydroxide, tetrabutylammonium hydroxide, ethylenediamine, diethylamine, triethylamine, ethylamine, ethanolamine or diethanolamine. The titanic acid hydrate is obtained by purification after the hydrolysis reaction of the titanium-containing compound; the purification is done to remove impurity ions to obtain a titanic acid hydrate with a purity of 97% or more; the purification may be conducted in a manner of one or more of water washing-centrifuge separation, water washing-membrane separation, water washing-filtration or dialysis.

In the above preparation method, preferably, the lithium compound in the aqueous solution of the lithium compound-containing peroxide is one or more selected from lithium hydroxide, lithium oxide, lithium peroxide In the aqueous solution of the lithium compound-containing peroxide, the concentration of the lithium compound is 0.4 to 1.0 mol/L.

In the above preparation method, preferably, in the aqueous solution of the lithium compound-containing peroxide, the peroxide is one or more selected from hydrogen peroxide, urea peroxide or peracetic acid. The concentration of the peroxide is controlled at 0.1 to 2.0 mol/L.

In the above preparation method the temperature of the heating reaction is 60 to 100°C; and the duration of the heating reaction is 0.5 to 24 hours.

In the above preparation method the temperature of the low temperature annealing treatment is 150 to 250°C; and the duration of the low temperature annealing treatment is 1 to 24 hours.

In the above preparation method, preferably, the hydrogen ion exchange includes: washing and separating the lithium titanate having a linear structure; adding the separated lithium titanate having a linear structure in an acid solution for hydrogen ion exchange to obtain a titanic acid having a linear structure, and washing the titanic acid having a linear structure before being separated and dried. Here, the acid solution used may be one or more selected from nitric acid, hydrochloric acid, sulfuric acid or acetic acid. The concentration of the acid solution may be controlled at 0.001 to 0.1 mol/L.

In the above preparation method, preferably, the temperature of the hydrothermal reaction is 105 to 240°C; and the duration of the hydrothermal reaction is 1 to 48 hours. The system of the hydrothermal reaction may be one of an acidic system, a neutral system or an alkaline system.

In the above preparation method the temperature of the high temperature annealing is 300 to 1000°C, preferably from 350 to 1000°C; and the duration of the high temperature annealing treatment is 1 to 24 hours.

The present invention also provides a method for surface modification of the above-mentioned linear porous titanium dioxide material. Preferably, the surface modification comprises one or more of carbon loading, graphene loading, black phosphorus loading, ruthenium oxide loading, lead oxide loading, nickel oxide loading, metal platinum loading, metal gold loading, metal silver loading, and metal copper loading.

The present invention also provides a method for semiconductor compositing of the above linear porous titanium dioxide material; preferably, the semiconductor compositing includes one or more of cadmium sulfide-semiconductor compositing, lead sulfide-semiconductor compositing, copper oxide-semiconductor compositing, cuprous oxide-semiconductor compositing, iron oxide-semiconductor compositing, ferrous oxide-semiconductor compositing, tungsten oxide-semiconductor compositing, zinc oxide-semiconductor compositing, gallium phosphide-semiconductor compositing, cadmium stannide-semiconductor compositing, molybdenum sulfide-semiconductor compositing, carbon nitride-semiconductor compositing.

The invention also provides the use of the above-mentioned linear porous titanium dioxide material in the field of one or more of lithium ion battery materials, sodium ion battery materials, potassium ion battery materials, catalytic hydrogenation materials, organic pollutant photocatalytic degradation, water photocatalytic decomposition for hydrogen production, gas sensing, dye-sensitized solar cells, perovskite solar cells, hydrophilic and hydrophobic materials, and biomedicines.

The advantages of the present invention are as follows:
The anatase phase titanium dioxide material provided by the present invention has a linear, single crystal, porous structure and active {100} and {001} crystal planes, wherein the porous structure may increase the specific surface area of the titanium dioxide material and increase reactive sites, the linear single crystal structure may reduce the grain boundary between particles, facilitates the transport of carriers in the long axis direction, and improves the applied effect of the material, and exposure of a large number of highly active {100} and {001} crystal planes is favorable to increase the surface activity of the material and improve the applied effect of the material. The preparation method of the anatase phase titanium dioxide material provided by the present invention cannot be realized by other approaches. With a simple production process, easily controllable process parameters and readily available raw materials, this preparation method has low production cost and can be easily scaled up for industrial production.

The titanium dioxide porous nanowire of the present invention has the following advantages in application:
(1) The structure of the titanium dioxide porous nanowire of the invention is favorable for electron-hole separation, increases active sites for catalytic reaction, has high photocatalytic activity, and is favorable for water photolysis for hydrogen generation or photocatalytic degradation of organic pollutants.
(2) The long axis of the structure of the titanium dioxide porous nanowire of the invention facilitates effective electron migration, the porous structure facilitates the rapid intercalation and deintercalation process of lithium ions, sodium ions, or potassium ions, while the large specific surface area is favorable to reduce the contact area between electrolyte and electrodes and lower the current density, providing good battery charging and discharging performance.
(3) The structure of the titanium dioxide porous nanowire of the present invention has a large specific surface area that is capable of adsorbing more dyes while the one-dimensional structure facilitates electron transport, which is advantageous in dye-sensitized solar cells.
(4) The structure of the titanium dioxide porous nanowire of the present invention is favorable for gas sensing, for example, applications in sensing gases such as hydrogen, oxygen, formaldehyde, propane, ethane, methane, carbon monoxide, carbon dioxide, and water vapor.
(5) The titanium dioxide porous nanowire of the present invention has a large specific surface area that is capable of adsorbing a large amount of organic species or heavy metal ions, provide an adsorption and separation effect.

### Brief Description of the Accompanying Drawings

Fig. 1 is an SEM image of the titanium dioxide material prepared in Example 1.
Fig. 2 is a TEM image of the titanium dioxide material prepared in Example 1.
Fig. 3 is an XRD pattern of the titanium dioxide material prepared in Example 1.
Fig. 4 is a transmission electron microscopy and electron diffraction pattern of the titanium oxide material prepared in Example 1.
Fig. 5 is an SEM image of the titanium dioxide material prepared in Example 1.
Fig. 6 is a graph showing the hydrogen generation efficiency by photocatalytic water decomposition with the titanium dioxide material prepared in Example 1 using ethanol as a sacrificial agent.
Fig. 7 is a graph showing the hydrogen generation efficiency by photocatalytic water decomposition with the titanium dioxide material prepared in Example 1 using triethanolamine as a sacrificial agent.
Fig. 8 is a diagram of the procedure for preparing a linear porous titanium dioxide material.

### Detailed Description of the Invention

The technical solutions in the embodiments of the present invention will be set forth clearly and wholly in the following description of the embodiments of the present invention to provide those skilled in the art a better understanding of the technical solution. Obviously, only some of the embodiments, but not all, of the present invention are illustrated.

Unless otherwise defined, all technical and scientific terms used herein have the same meaning as commonly understood by one of ordinary skill in the art to which this invention belongs. The terminology used in the description of the present invention is for the sole purpose of illustrating particular embodiments and is not intended to limit the invention. The term "and/or" as used herein includes any and all combinations of one or more of the associated items listed.

Particular embodiments of the invention are disclosed herein in details with reference to the description hereinafter.

Features described and/or illustrated with respect to one embodiment may be used in one or more other embodiments in the same or similar manner in combination with, or in place of, features in other embodiments.

It should be emphasized that the term "comprise/include" as used herein indicates the presence of a feature, assembly, step, or component, but does not exclude the presence or addition of one or more other features, assembly, steps, or components. The principle of the present invention is described in details below with reference to a number of embodiments.

### Example 1

This example provides a method of preparing a linear porous titanium dioxide material, which comprises the following steps:
1 g of titanium sulfate was dispersed and dissolved under stirring in 100 ml of an aqueous solution to form a solution, and aqueous ammonia at a concentration of 0.1 mol/L was slowly added dropwise to the above solution until the solution was neutral (about pH 7). The titanium sulfate was gradually and completely hydrolyzed to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.6 mol/L and a hydrogen peroxide concentration of 0.8 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, this clear yellow solution was heated to 80 °C and kept at constant temperature under stirring for 6 hours, the reaction was terminated, and a white solid was obtained after separation. Subsequently, the above white solid was dried and placed in an oven at 220 °C for annealing treatment for 12 hours to remove any hydrogen peroxide adsorbed or included in the white solid. Then, the treated white solid was washed with deionized water for several times and placed in a 0.01 mol/L nitric acid solution for hydrogen ion exchange. After hydrogen ion exchange, the solid was washed with deionized water for several times until the pH of the washing solution was close to neutral and then dried.

Finally, the dried white solid was placed in a muffle furnace and annealed at 650 °C for 3 hours to obtain an anatase phase linear porous titanium dioxide material.

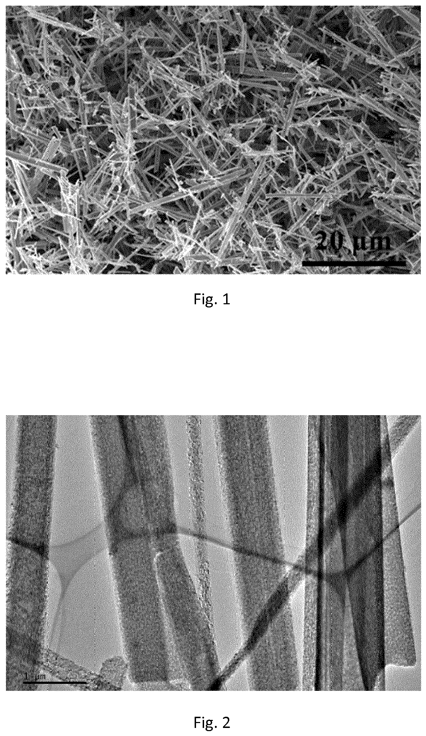

The SEM image of the titanium dioxide material prepared in this example is shown in Fig. 1. As can be seen from Fig. 1, the titanium dioxide material is linear, with a diameter of 20 nm to 5 µm, mostly populated within 100 nm to 1000 nm, and a length of 1 µm to 50 µm, mostly populated within 5 µm to 20 µm.

The TEM image of the titanium dioxide material prepared in this example is shown in Fig. 2. As can be seen from Fig. 2, the titanium dioxide material has a porous structure, with a pore size of about 5 nm to 20 nm.

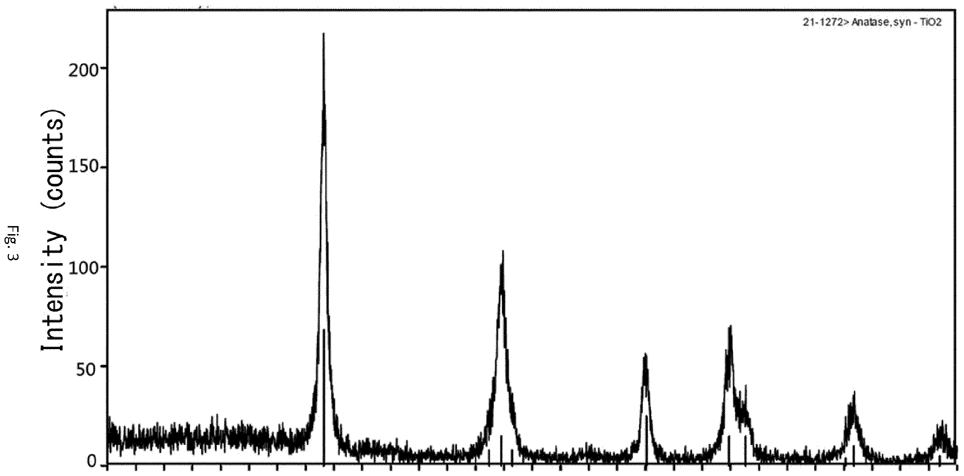

The XRD pattern of the titanium dioxide material prepared in this example is shown in Fig. 3. As can be seen from Fig. 3, the linear porous titanium dioxide material of this example has an anatase phase structure.

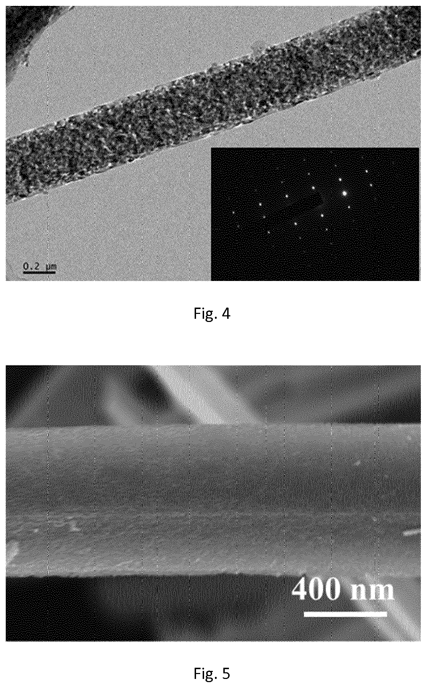

The transmission electron microscopy and electron diffraction pattern of the titanium dioxide material prepared in this example is shown in Fig. 4. As can be seen from Fig. 4, the titanium dioxide material of this example has a single crystal structure, and the long axis of the single crystal is oriented in the <010> direction. The linear porous structure is consisted of a plurality of small particles, and the particles have an oriented growth direction.

A high-magnification SEM image of the titanium dioxide material prepared in this example is shown in Fig. 5. As can be seen from Fig. 5, the titanium dioxide material of this example has a structure of one or more rectangular columns which have flat side surfaces that are perpendicular to each other, the side surfaces being highly-active anatase phase {100} and {001} crystal planes.

It can be seen from the above results that the titanium dioxide material prepared in this example is a linear porous anatase phase single crystal titanium dioxide material and has a structure of one or more rectangular columns.

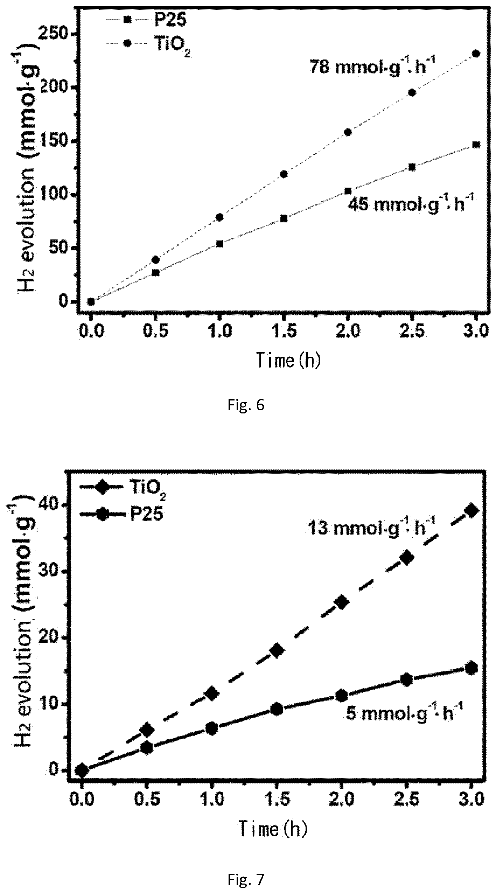

The hydrogen generation efficiency by photocatalytic water decomposition with the titanium dioxide material prepared in this example is shown in Fig. 6. The hydrogen generation efficiency by photocatalytic water decomposition was determined as follows: 50 mg of the sample was added to 90 mL of water, followed by addition of chloroplatinic acid with a mass ratio of platinum to titanium dioxide of 5,000 ppm; after irradiation for 30 minutes with a simulated sun light source, 10 mL of ethanol was added and the amount of the hydrogen generated was calculated. As seen from Fig. 6, when ethanol is used as the sacrificial agent, the hydrogen generation efficiency under standard sun light irradiation is as high as 78 mmol·g⁻¹·h⁻¹, which is 1.7 times higher as compared to a commercial P25 material.

The hydrogen generation efficiency by photocatalytic water decomposition with the titanium dioxide material prepared in this example is shown in Fig. 7. The hydrogen generation efficiency by photocatalytic water decomposition was determined as follows: 50 mg of the sample was added to 90 mL of water, followed by addition of chloroplatinic acid with a mass ratio of platinum to titanium dioxide of 5,000 ppm; after irradiation for 30 minutes with a simulated sun light source, 10 mL of triethanolamine was added and the amount of the hydrogen generated was calculated. As seen from Fig. 6, when triethanolamine is used as the sacrificial agent, the hydrogen generation efficiency under standard sun light irradiation is as high as 13 mmol·g⁻¹·h⁻¹, which is 2.6 times higher as compared to a commercial P25 material.

### Example 2

This example provides a method of preparing a linear porous titanium dioxide material, which comprises the following steps:
0.1 g of titanium oxysulfate was dispersed and dissolved under stirring in 100 ml of an aqueous solution to form a solution, and aqueous ammonia at a concentration of 0.01 mol/L was slowly added dropwise to the above solution until the solution was neutral (about pH 7). The titanium oxysulfate was gradually and completely hydrolyzed to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.4 mol/L and a hydrogen peroxide concentration of 0.1 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, this clear yellow solution was heated to 60 °C and kept at constant temperature under stirring for 24 hours, the reaction was terminated, and a white solid was obtained after separation. Subsequently, the above white solid was dried and placed in an oven at 150 °C for annealing treatment for 24 hours to remove any hydrogen peroxide adsorbed or included in the white solid. Then, the treated white solid was washed with deionized water for several times and placed in a 0.001 mol/L hydrochloric acid solution for hydrogen ion exchange. After hydrogen ion exchange, the solid was washed with deionized water for several times until the pH of the washing solution was close to neutral and then dried.

Finally, the dried white solid was placed in a muffle furnace and annealed at 300 °C for 24 hours to obtain an anatase phase linear porous titanium dioxide material.

### Example 3

This example provides a method of preparing a linear porous titanium dioxide material, which comprises the following steps:
6 g of titanium tetrachloride was dispersed and dissolved under stirring in 100 ml of an aqueous solution to form a solution, and aqueous ammonia at a concentration of 0.2 mol/L was slowly added dropwise to the above solution until the solution was neutral (about pH 7). The titanium tetrachloride was gradually and completely hydrolyzed to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 1.0 mol/L and a hydrogen peroxide concentration of 2.0 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, this clear yellow solution was heated to 100 °C and kept at constant temperature under stirring for 0.5 hour, the reaction was terminated, and a white solid was obtained after separation. Subsequently, the above white solid was dried and placed in an oven at 250 °C for annealing treatment for 1 hour to remove any hydrogen peroxide adsorbed or included in the white solid. Then, the treated white solid was washed with deionized water for several times and placed in a 0.1 mol/L acetic acid solution for hydrogen ion exchange. After hydrogen ion exchange, the solid was washed with deionized water for several times until the pH of the washing solution was close to neutral and then dried.

Finally, the dried white solid was placed in a muffle furnace and annealed at 1000 °C for 1 hour to obtain an anatase phase linear porous titanium dioxide material.

### Example 4

This example provides a method of preparing a linear porous titanium dioxide material, which comprises the following steps:
2 g of titanium tetrafluoride was dispersed and dissolved under stirring in 100 ml of an aqueous solution to form a solution, and aqueous ammonia at a concentration of 0.1 mol/L was slowly added dropwise to the above solution until the solution was neutral (about pH 7). The titanium tetrafluoride was gradually and completely hydrolyzed to form a titanic acid hydrate precipitate, and the titanic acid hydrate precipitate was ultrasonically dispersed, washed with deionized water for several times, and then separated by centrifugation.

Next, peracetic acid and lithium peroxide were dissolved in water to a lithium peroxide concentration of 0.4 mol/L and a peracetic acid concentration of 1.0 mol/L. Subsequently, the above titanic acid hydrate precipitate upon centrifugation was dispersed in 100 ml of the aqueous solution containing peracetic acid and lithium peroxide prepared as above, and a clear yellow solution was formed under stirring. Then, this clear yellow solution was heated to 70 °C and kept at constant temperature under stirring for 12 hours, the reaction was terminated, and a white solid was obtained after separation. Subsequently, the above white solid was dried and placed in an oven at 200 °C for annealing treatment for 20 hours to remove any hydrogen peroxide adsorbed or included in the white solid. Then, the treated white solid was washed with deionized water for several times and placed in a 0.01 mol/L sulfuric acid solution for hydrogen ion exchange. After hydrogen ion exchange, the solid was washed with deionized water for several times until the pH of the washing solution was close to neutral and then dried.

Finally, the dried white solid was placed in a muffle furnace and annealed at 500 °C for 8 hours to obtain an anatase phase linear porous titanium dioxide material.

### Example 5

This example provides a method of preparing a linear porous titanium dioxide material, which comprises the following steps:
Under stirring, 1.5 g of titanium propoxide was dispersed in 100 ml of an aqueous solution prepared by dissolving hydrogen peroxide and lithium hydroxide in water, and a clear yellow solution was formed under stirring. The lithium hydroxide concentration therein was 0.5 mol/L and the hydrogen peroxide concentration was 1.0 mol/L. Then, the clear yellow solution was heated to 90 °C and kept at constant temperature under stirring for 4 hours, the reaction was terminated, and a white solid was obtained after separation. Subsequently, the above white solid was dried and placed in an oven at 180 °C for annealing treatment for 24 hours to remove any hydrogen peroxide adsorbed or included in the white solid. Then, the treated white solid was washed with deionized water for several times and placed in a 0.01 mol/L nitric acid solution for hydrogen ion exchange. After hydrogen ion exchange, the solid was washed with deionized water for several times until the pH of the washing solution was close to neutral and then dried.

Finally, the dried white solid was dispersed into 100 ml of pure water, and a hydrothermal reaction was carried out at 160 °C for 24 hours to obtain an anatase phase linear porous titanium dioxide material.

### Example 6

This example provides a method of preparing a linear porous titanium dioxide material, which comprises the following steps:
Under stirring, 1.5 g of titanium ethoxide was dispersed in 100 ml of an aqueous solution prepared by dissolving hydrogen peroxide and lithium hydroxide in water, and a clear yellow solution was formed under stirring. The lithium hydroxide concentration therein was 0.7 mol/L and the hydrogen peroxide concentration was 0.8 mol/L. Then, the clear yellow solution was heated to 100 °C and kept at constant temperature under stirring for 2 hours, the reaction was terminated, and a white solid was obtained after separation. Subsequently, the above white solid was dried and placed in an oven at 230 °C for annealing treatment for 10 hours to remove any hydrogen peroxide adsorbed or included in the white solid. Then, the treated white solid was washed with deionized water for several times and placed in a 0.05 mol/L hydrochloric acid solution for hydrogen ion exchange. After hydrogen ion exchange, the solid was washed with deionized water for several times until the pH of the washing solution was close to neutral and then dried.

Finally, the dried white solid was dispersed into 100 ml of an aqueous solution of nitric acid at a concentration of 0.01 mol/L, and a hydrothermal reaction was carried out at 200 °C for 10 hours to obtain an anatase phase linear porous titanium dioxide material.

### Example 7

This example provides a method of preparing a linear porous titanium dioxide material, which comprises the following steps:
Under stirring, 2 g of tetrabutyl titanate was dispersed in 100 ml of an aqueous solution for direct hydrolysis to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.8 mol/L and a hydrogen peroxide concentration of 0.9 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, the clear yellow solution was heated to 80 °C and kept at constant temperature under stirring for 8 hours, the reaction was terminated, and a white solid was obtained after separation. Subsequently, the above white solid was dried and placed in an oven at 200 °C for annealing treatment for 24 hours to remove any hydrogen peroxide adsorbed or included in the white solid. Then, the treated white solid was washed with deionized water for several times and placed in a 0.01 mol/L sulfuric acid solution for hydrogen ion exchange. After hydrogen ion exchange, the solid was washed with deionized water for several times until the pH of the washing solution was close to neutral and then dried.

Finally, the dried white solid was dispersed into 100 ml of an aqueous solution of hydrofluoric acid at a concentration of 0.01 mol/L, and a hydrothermal reaction was carried out at 105 °C for 48 hours to obtain an anatase phase linear porous titanium dioxide material.

### Example 8

This example provides a method of preparing a linear porous titanium dioxide material, which comprises the following steps:
Under stirring, 2 g of titanium glyceroxide was dispersed in 100 ml of an aqueous solution for direct hydrolysis to form a titanic acid hydrate precipitate, and the titanic acid hydrate precipitate was ultrasonically dispersed, washed with deionized water for several times, and then separated by centrifugation.

Next, hydrogen peroxide and lithium superoxide were dissolved in water to a lithium hydroxide concentration of 0.7 mol/L and a hydrogen peroxide concentration of 0.8 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, the clear yellow solution was heated to 80 °C and kept at constant temperature under stirring for 10 hours, the reaction was terminated, and a white solid was obtained after separation. Subsequently, the above white solid was dried and placed in an oven at 250 °C for annealing treatment for 4 hours to remove any hydrogen peroxide adsorbed or included in the white solid. Then, the treated white solid was washed with deionized water for several times and placed in a 0.01 mol/L nitric acid solution for hydrogen ion exchange. After hydrogen ion exchange, the solid was washed with deionized water for several times until the pH of the washing solution was close to neutral and then dried.

Finally, the dried white solid was dispersed into 100 ml of an aqueous solution of diethylamine at a concentration of 0.0001 mol/L, and a hydrothermal reaction was carried out at 240 °C for 1 hour to obtain an anatase phase linear porous titanium dioxide material.

### Example 9

This example provides a method of preparing a linear porous titanium dioxide material, which comprises the following steps:
Under stirring, 2 g of tetrabutyl titanate was dispersed in 100 ml of an aqueous solution for direct hydrolysis to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.8 mol/L and a hydrogen peroxide concentration of 0.9 mol/L. Subsequently, the above titanic acid hydrate precipitate upon centrifugation was dispersed in 100 ml of the hydrogen peroxide aqueous solution containing lithium hydroxide prepared as above, into which polyethylene glycol with a content of 0.5% was added, and a clear yellow solution was formed under stirring. Then, the clear yellow solution was heated to 80 °C and kept at constant temperature under stirring for 8 hours, the reaction was terminated, and a white solid was obtained after separation. Subsequently, the above white solid was dried and placed in an oven at 200 °C for annealing treatment for 24 hours to remove any hydrogen peroxide adsorbed or included in the white solid. Then, the treated white solid was washed with deionized water for several times and placed in a 0.01 mol/L sulfuric acid solution for hydrogen ion exchange. After hydrogen ion exchange, the solid was washed with deionized water for several times until the pH of the washing solution was close to neutral and then dried.

Finally, the dried white solid was dispersed into 100 ml of an aqueous solution of hydrofluoric acid at a concentration of 0.01 mol/L, and a hydrothermal reaction was carried out at 180 °C for 12 hours to obtain an anatase phase linear porous titanium dioxide material.

### Example 10

This example provides a method for surface modification of a linear porous titanium dioxide material, which comprises the following steps:
Under stirring, 1 g of titanium sulfate was dispersed and dissolved under stirring in 100 ml of an aqueous solution to form a solution, and aqueous ammonia at a concentration of 0.1 mol/L was slowly added dropwise to the above solution until the solution was neutral (about pH 7). The titanium sulfate was gradually and completely hydrolyzed to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.6 mol/L and a hydrogen peroxide concentration of 0.8 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, this clear yellow solution was heated to 80 °C and kept at constant temperature under stirring for 6 hours, the reaction was terminated, and a white solid was obtained after separation. Subsequently, the above white solid was dried and placed in an oven at 220 °C for annealing treatment for 12 hours to remove any hydrogen peroxide adsorbed or included in the white solid. Then, the treated white solid was washed with deionized water for several times and placed in a 0.01 mol/L nitric acid solution for hydrogen ion exchange. After hydrogen ion exchange, the solid was washed with deionized water for several times until the pH of the washing solution was close to neutral and then dried.

Finally, the dried white solid was dispersed in 100 ml of an aqueous solution containing graphene oxide at a mass fraction of 500 ppm, and a hydrothermal reaction was carried out at 180 °C for 12 hours to obtain a graphene-loaded anatase phase linear porous titanium dioxide material.

### Example 11

This example provides a method for surface modification of a linear porous titanium dioxide material, which comprises the following steps:
Under stirring, 1 g of titanium sulfate was dispersed and dissolved under stirring in 100 ml of an aqueous solution to form a solution, and aqueous ammonia at a concentration of 0.1 mol/L was slowly added dropwise to the above solution until the solution was neutral (about pH 7). The titanium sulfate was gradually and completely hydrolyzed to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.6 mol/L and a hydrogen peroxide concentration of 0.8 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, this clear yellow solution was heated to 80 °C and kept at constant temperature under stirring for 6 hours, the reaction was terminated, and a white solid was obtained after separation. Subsequently, the above white solid was dried and placed in an oven at 220 °C for annealing treatment for 12 hours to remove any hydrogen peroxide adsorbed or included in the white solid. Then, the treated white solid was washed with deionized water for several times and placed in a 0.01 mol/L nitric acid solution for hydrogen ion exchange. After hydrogen ion exchange, the solid was washed with deionized water for several times until the pH of the washing solution was close to neutral and then dried.

The dried white solid was dispersed in 100 ml of an aqueous solution containing nickel acetate at a mass fraction of 1,000 ppm, and then separated and dried.

Finally, the separated and dried solid power was placed in a muffle furnace and annealed at 600 °C for 4 hours to obtain a nickel oxide-loaded anatase phase linear porous titanium dioxide material.

### Example 12

This example provides a method for semiconductor compositing of a linear porous titanium dioxide material, which comprises the following steps:
Under stirring, 1 g of titanium sulfate was dispersed and dissolved under stirring in 100 ml of an aqueous solution to form a solution, and aqueous ammonia at a concentration of 0.1 mol/L was slowly added dropwise to the above solution until the solution was neutral (about pH 7). The titanium sulfate was gradually and completely hydrolyzed to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.6 mol/L and a hydrogen peroxide concentration of 0.8 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, this clear yellow solution was heated to 80 °C and kept at constant temperature under stirring for 6 hours, the reaction was terminated, and a white solid was obtained after separation. Subsequently, the above white solid was dried and placed in an oven at 220 °C for annealing treatment for 12 hours to remove any hydrogen peroxide adsorbed or included in the white solid. Then, the treated white solid was washed with deionized water for several times and placed in a 0.01 mol/L nitric acid solution for hydrogen ion exchange. After hydrogen ion exchange, the solid was washed with deionized water for several times until the pH of the washing solution was close to neutral and then dried.

The dried white solid was dispersed in 100 ml of an aqueous solution containing copper acetate at a mass fraction of 5,000 ppm, and then separated and dried. Finally, the separated and dried solid power was placed in a muffle furnace and annealed at 650 °C for 3 hours to obtain a composite material of a copper oxide semiconductor and anatase phase linear porous titanium dioxide.

### Example 13

This example provides a method for semiconductor compositing of a linear porous titanium dioxide material, which comprises the following steps:
1 g of titanium sulfate was dispersed and dissolved under stirring in 100 ml of an aqueous solution to form a solution, and aqueous ammonia at a concentration of 0.1 mol/L was slowly added dropwise to the above solution until the solution was neutral (about pH 7). The titanium sulfate was gradually and completely hydrolyzed to form a titanic acid hydrate precipitate, and the titanic acid hydrate precipitate was ultrasonically dispersed, washed with deionized water for several times, and then separated by centrifugation.

Next, hydrogen peroxide and lithium hydroxide were dissolved in water to a lithium hydroxide concentration of 0.6 mol/L and a hydrogen peroxide concentration of 0.8 mol/L. Subsequently, the above titanic acid hydrate precipitate upon centrifugation was dispersed in 100 ml of the hydrogen peroxide aqueous solution containing lithium hydroxide prepared as above, and a clear yellow solution was formed under stirring. Then, this clear yellow solution was heated to 80 °C and kept at constant temperature under stirring for 6 hours, the reaction was terminated, and a white solid was obtained after separation. Subsequently, the above white solid was dried and placed in an oven at 220 °C for annealing treatment for 12 hours to remove any hydrogen peroxide adsorbed or included in the white solid. Then, the treated white solid was washed with deionized water for several times and placed in a 0.01 mol/L nitric acid solution for hydrogen ion exchange. After hydrogen ion exchange, the solid was washed with deionized water for several times until the pH of the washing solution was close to neutral and then dried.

The dried white solid was mixed with 0.5 g urea by grinding and then placed in a muffle furnace and annealed at 550 °C for 3 hours to obtain a composite material of a carbon nitride semiconductor and anatase phase linear porous titanium dioxide.

## Claims

1. A linear porous titanium dioxide material, wherein the linear porous titanium dioxide material has an anatase phase structure and a single crystal structure;
the structure of the linear porous titanium dioxide material is composed of a plurality of particles having an oriented growth direction,
wherein the pores in the linear porous structure of the linear porous titanium dioxide material have a size of 5 nm to 20 nm, determined by TEM image, and
wherein the long-axis of the single crystal of the linear porous titanium dioxide material is oriented in the <010> direction.

2. The linear porous titanium dioxide material according to claim 1, wherein the linear porous titanium dioxide material has a structure of one or more rectangular columns which have flat side surfaces that are perpendicular to each other.

3. The linear porous titanium dioxide material according to claim 1, wherein the side surfaces of the linear porous titanium dioxide material are anatase phase {100} and {001} crystal planes.

4. The linear porous titanium dioxide material according to claim 1, wherein the linear porous titanium dioxide material has a linear structure having a diameter of 20 nm to 5 µm and a length of 1 µm to 50 µm;
preferably, the linear porous titanium dioxide material has a linear structure having a diameter of 100 nm to 1,000 nm and a length of 5 µm to 20 µm.

5. A method of preparing a linear porous titanium dioxide material according to any one of claims 1 to 4, wherein the preparation method comprises the steps of:
dispersing a titanium source in an aqueous solution of a peroxide containing a lithium compound under stirring to form a solution; preferably the titanium source is one or more selected from the group consisting of titanium ethoxide, titanium propoxide, tetrabutyl titanate, titanium glycolate, titanium glyceroxide, titanium sulfate, titanium oxysulfate, titanium tetrachloride, titanium tetrafluoride, ammonium fluorotitanate, titanium nitride, titanium dioxide, metatitanic acid, and orthotitanic acid; preferably the lithium compound in the aqueous solution of the lithium compound-containing peroxide is one or more selected from the group consisting of lithium hydroxide, lithium oxide, and lithium peroxide; the concentration of the lithium compound is 0.4 to 1.0 mol/L; preferably in the aqueous solution of the lithium compound-containing peroxide, the peroxide is one or more selected from the group consisting of hydrogen peroxide, urea peroxide, and peracetic acid; the concentration of the peroxide is 0.1 to 2.0 mol/L;
subjecting the solution to a heating reaction to obtain lithium titanate peroxide having a linear structure; the temperature of the heating reaction is 60 to 100°C; and the duration of the heating reaction is 0.5 to 24 hours;
subjecting the lithium titanate peroxide to a low temperature annealing treatment to obtain lithium titanate having a linear structure; the temperature of the low temperature annealing treatment is 150C to 250°C; and the duration of the low temperature annealing treatment is 1 to 24 hours;
dispersing the lithium titanate in an acid solution for hydrogen ion exchange to obtain titanic acid having a linear structure;
subjecting the titanic acid to heat treatment to obtain the linear porous titanium dioxide material; the heat treatment includes hydrothermal reactionand/or high temperature annealing; the temperature of the high temperature annealing is 300C to 1000°C; and the duration of the high temperature annealing treatment is 1 to 24 hours.

6. The preparation method according to claim 5, wherein a polymer is added to the solution while the titanium source is being dispersed in an aqueous solution of a peroxide containing a lithium compound under stirring to form a solution;
wherein the polymer is one or more selected from the group consisting of chitosan, guar gum, methyl cellulose, ethyl cellulose, hydroxyethyl cellulose, hydroxypropyl cellulose, hydroxypropyl methyl cellulose, polyvinyl alcohol, polyacrylamide, polyethylene oxide, polyethylene glycol, and polyvinylpyrrolidone;
the mass fraction of the polymer in the solution is 100 ppm to 100,000 ppm, more preferably 1,000 ppm to 10,000 ppm.

7. The preparation method according to claim 5, wherein the titanium source is selected from titanic acid hydrate; and the titanic acid hydrate is obtained by a hydrolysis reaction of a titanium-containing compound.

8. The preparation method according to claim 7, wherein the titanium-containing compound is one or more selected from the group consisting of titanium ethoxide, titanium propoxide, tetrabutyl titanate, titanium glycolate, titanium glyceroxide, titanium sulfate, titanium oxysulfate, titanium tetrachloride, titanium tetrafluoride, and ammonium fluorotitanate; the hydrolysis reaction is conducted by dispersing the titanium-containing compound in pure water for direct hydrolysis to produce the titanic acid hydrate; alternatively, the hydrolysis reaction is conducted by dispersing the titanium-containing compound in an aqueous solution containing an alkali substance for hydrolysis to produce the titanic acid hydrate.

9. The preparation method according to claim 7, wherein the titanic acid hydrate is obtained by purification after the hydrolysis reaction of the titanium-containing compound; the purification is done to remove impurity ions to obtain a titanic acid hydrate with a purity of 97% or more; the purification is conducted in a manner of one or more of water washing-centrifuge separation, water washing-membrane separation, water washing-filtration, and dialysis.

10. The preparation method according to claim 5, wherein the hydrogen ion exchange includes:
washing and separating the lithium titanate having a linear structure;
adding the separated lithium titanate having a linear structure in an acid solution for hydrogen ion exchange to obtain a titanic acid having a linear structure, and washing the titanic acid having a linear structure before being separated and dried.

11. The preparation method according to claim 10, wherein the acid solution is one or more selected from the group consisting of nitric acid, hydrochloric acid, sulfuric acid, and acetic acid; wherein the concentration of the acid solution is 0.001 to 0.1 mol/L.

12. The preparation method according to claim 5, wherein the temperature of the hydrothermal reaction is 105 to 240°C; and the duration of the hydrothermal reaction is 1 to 48 hours.

13. The preparation method according to claim 12, wherein the system of the hydrothermal reaction is one of an acidic system, a neutral system, and an alkaline system.

14. The preparation method according to claim 5, wherein the temperature of the high temperature annealing is 350 to 1000C.

15. A method for surface modification of a linear porous titanium dioxide material according to any one of claims 1-4;
wherein the surface modification comprises one or more of carbon loading, graphene loading, black phosphorus loading, ruthenium oxide loading, lead oxide loading, nickel oxide loading, metal platinum loading, metal gold loading, metal silver loading, and metal copper loading.

16. A method for semiconductor compositing of a linear porous titanium dioxide material according to any one of claims 1-4;
the semiconductor compositing includes one or more of semiconductor compositing with cadmium sulfide, cadmium sulfide-semiconductor compositing, lead sulfide-semiconductor compositing, copper oxide-semiconductor compositing, cuprous oxide-semiconductor compositing, iron oxide-semiconductor compositing, ferrous oxide-semiconductor compositing, tungsten oxide-semiconductor compositing, zinc oxide-semiconductor compositing, gallium phosphide-semiconductor compositing, cadmium stannide-semiconductor compositing, molybdenum sulfide-semiconductor compositing, and carbon nitride-semiconductor compositing.

17. Use of the linear porous titanium dioxide material according to any one of claims 1 to 4 in the field of one or more of lithium ion battery materials, sodium ion battery materials, potassium ion battery materials, catalytic hydrogenation materials, organic pollutant photocatalytic degradation, water photocatalytic decomposition for hydrogen production, gas sensing, dye-sensitized solar cells, perovskite solar cells, hydrophilic and hydrophobic materials, and biomedicines.

## Patentansprüche

1. Lineares poröses Titandioxidmaterial, wobei das lineare poröse Titandioxidmaterial eine Anatas-Phasenstruktur und eine Einkristallstruktur aufweist;
die Struktur des linearen porösen Titandioxidmaterials aus einer Vielzahl von Teilchen mit einer orientierten Wachstumsrichtung zusammengesetzt ist,
wobei die Poren in der linearen porösen Struktur des linearen porösen Titandioxidmaterials eine Größe von 5 nm bis 20 nm haben, bestimmt durch eine TEM-Aufnahme, und
wobei die Längsachse des Einkristalls des linearen porösen Titandioxidmaterials in der <010>-Richtung orientiert ist.

2. Lineares poröses Titandioxidmaterial gemäß Anspruch 1, wobei das lineare poröse Titandioxidmaterial eine Struktur aus einer oder mehreren rechteckigen Säulen aufweist, die flache Seitenflächen haben, die senkrecht zueinander sind.

3. Lineares poröses Titandioxidmaterial gemäß Anspruch 1, wobei die Seitenflächen des linearen porösen Titandioxidmaterials {100}- und {001}-Kristallebenen der Anatas-Phase sind.

4. Lineares poröses Titandioxidmaterial gemäß Anspruch 1, wobei das lineare poröse Titandioxidmaterial eine lineare Struktur mit einem Durchmesser von 20 nm bis 5 µm und einer Länge von 1 µm bis 50 µm aufweist;
vorzugsweise weist das lineare poröse Titandioxidmaterial eine lineare Struktur mit einem Durchmesser von 100 nm bis 1.000 nm und einer Länge von 5 µm bis 20 µm auf.

5. Verfahren zur Herstellung eines linearen porösen Titandioxidmaterials gemäß einem der Ansprüche 1 bis 4, wobei das Herstellungsverfahren die folgenden Schritte umfasst:
Dispergieren einer Titanquelle in einer wässrigen Lösung eines Peroxids, das eine Lithiumverbindung enthält, unter Rühren zur Bildung einer Lösung; wobei die Titanquelle vorzugsweise eine oder mehrere ist, ausgewählt aus der Gruppe bestehend aus Titanethoxid, Titanpropoxid, Tetrabutyltitanat, Titanglykolat, Titanglyceroxid, Titansulfat, Titanoxysulfat, Titantetrachlorid, Titantetrafluorid, Ammoniumfluortitanat, Titannitrid, Titandioxid, Metatitansäure und Orthotitansäure; die Lithiumverbindung in der wässrigen Lösung des lithiumverbindungshaltigen Peroxids vorzugsweise eine oder mehrere ist, ausgewählt aus der Gruppe bestehend aus Lithiumhydroxid, Lithiumoxid und Lithiumperoxid; die Konzentration der Lithiumverbindung 0,4 bis 1,0 mol/L beträgt; in der wässrigen Lösung des lithiumverbindungshaltigen Peroxids das Peroxid vorzugsweise eines oder mehrere ist, ausgewählt aus der Gruppe bestehend aus Wasserstoffperoxid, Harnstoffperoxid und Peressigsäure; die Konzentration des Peroxids 0,1 bis 2,0 mol/L beträgt;
Unterziehen der Lösung einer Erwärmungsreaktion, um Lithiumtitanatperoxid mit einer linearen Struktur zu erhalten; wobei die Temperatur der Erwärmungsreaktion 60 bis 100 °C beträgt; und die Dauer der Erwärmungsreaktion 0,5 bis 24 Stunden beträgt;
Unterziehen des Lithiumtitanatperoxids einer Niedrigtemperatur-Glühbehandlung, um Lithiumtitanat mit einer linearen Struktur zu erhalten; wobei die Temperatur der Niedrigtemperatur-Glühbehandlung 150°C bis 250°C beträgt; und die Dauer der Niedrigtemperatur-Glühbehandlung 1 bis 24 Stunden beträgt;
Dispergieren des Lithiumtitanats in einer Säurelösung zum Wasserstoffionenaustausch, um Titansäure mit einer linearen Struktur zu erhalten;
Unterziehen der Titansäure einer Wärmebehandlung, um das lineare poröse Titandioxidmaterial zu erhalten; wobei die Wärmebehandlung eine hydrothermale Reaktion und/oder ein Hochtemperaturglühen einschließt; die Temperatur des Hochtemperaturglühens 300°C bis 1000°C beträgt; und die Dauer des Hochtemperaturglühens 1 bis 24 Stunden beträgt.

6. Herstellungsverfahren gemäß Anspruch 5, wobei der Lösung ein Polymer zugesetzt wird, während die Titanquelle in einer wässrigen Lösung eines Peroxids, das eine Lithiumverbindung enthält, unter Rühren dispergiert wird, um eine Lösung zu bilden;
wobei das Polymer eines oder mehrere ist, ausgewählt aus der Gruppe bestehend aus Chitosan, Guargummi, Methylcellulose, Ethylcellulose, Hydroxyethylcellulose, Hydroxypropylcellulose, Hydroxypropylmethylcellulose, Polyvinylalkohol, Polyacrylamid, Polyethylenoxid, Polyethylenglykol und Polyvinylpyrrolidon;
wobei der Massenanteil des Polymers in der Lösung 100 ppm bis 100.000 ppm, bevorzugter 1.000 ppm bis 10.000 ppm, beträgt.

7. Herstellungsverfahren gemäß Anspruch 5, wobei die Titanquelle aus Titansäurehydrat ausgewählt ist; und das Titansäurehydrat durch eine Hydrolysereaktion einer titanhaltigen Verbindung erhalten wird.

8. Herstellungsverfahren gemäß Anspruch 7, wobei die titanhaltige Verbindung eine oder mehrere ist, ausgewählt aus der Gruppe bestehend aus Titanethoxid, Titanpropoxid, Tetrabutyltitanat, Titanglykolat, Titanglyceroxid, Titansulfat, Titanoxysulfat, Titantetrachlorid, Titantetrafluorid und Ammoniumfluortitanat; die Hydrolysereaktion durch Dispergieren der titanhaltigen Verbindung in reinem Wasser zur direkten Hydrolyse zur Bildung des Titansäurehydrat durchgeführt wird; die Hydrolysereaktion alternativ durch Dispergieren der titanhaltigen Verbindung in einer wässrigen Lösung, die eine alkalische Substanz enthält, zur Hydrolyse unter Bildung des Titansäurehydrat durchgeführt wird.

9. Herstellungsverfahren gemäß Anspruch 7, wobei das Titansäurehydrat durch Reinigung nach der Hydrolysereaktion der titanhaltigen Verbindung erhalten wird; wobei die Reinigung durchgeführt wird, um Verunreinigungsionen zu entfernen, um ein Titansäurehydrat mit einer Reinheit von 97% oder mehr zu erhalten; wobei die Reinigung auf eine oder mehrere Arten einer Wasserwasch-Zentrifugentrennung, einer Wasserwasch-Membran-Trennung, einer Wasserwasch-Filtration und einer Dialyse durchgeführt wird.

10. Herstellungsverfahren gemäß Anspruch 5, wobei der Wasserstoffionenaustausch Folgendes einschließt:
Waschen und Abtrennen des Lithiumtitanats mit einer linearen Struktur;
Zugabe des abgetrennten Lithiumtitanats mit linearer Struktur in eine saure Lösung zum Wasserstoffionenaustausch, um eine Titansäure mit linearer Struktur zu erhalten, und Waschen der Titansäure mit linearer Struktur vor dem Abtrennen und Trocknen.

11. Herstellungsverfahren gemäß Anspruch 10, wobei die Säurelösung eine oder mehrere ist, ausgewählt aus der Gruppe bestehend aus Salpetersäure, Salzsäure, Schwefelsäure und Essigsäure; wobei die Konzentration der Säurelösung 0,001 bis 0,1 mol/L beträgt.

12. Herstellungsverfahren gemäß Anspruch 5, wobei die Temperatur der hydrothermalen Reaktion 105 bis 240 °C beträgt; und die Dauer der hydrothermalen Reaktion 1 bis 48 Stunden beträgt.

13. Herstellungsverfahren gemäß Anspruch 12, wobei das System der hydrothermalen Reaktion eines ist aus einem sauren System, einem neutralen System und einem alkalischen System.

14. Herstellungsverfahren gemäß Anspruch 5, wobei die Temperatur des Hochtemperaturglühens 350 bis 1000°C beträgt.

15. Verfahren zur Oberflächenmodifikation eines linearen porösen Titandioxidmaterials gemäß einem der Ansprüche 1-4;
wobei die Oberflächenmodifikation eine oder mehrere aus Kohlenstoffbeladung, Graphenbeladung, Beladung mit schwarzem Phosphor, Rutheniumoxidbeladung, Bleioxidbeladung, Nickeloxidbeladung, Metallplatinbeladung, Metallgoldbeladung, Metallsilberbeladung und Metallkupferbeladung umfasst.

16. Verfahren zur Zusammensetzung eines Halbleiters eines linearen porösen Titandioxidmaterials gemäß einem der Ansprüche 1-4;
wobei die Zusammensetzung eines Halbleiters eines oder mehrere aus einer Zusammensetzung eines Halbleiters mit Cadmiumsulfid, einer Zusammensetzung eines Cadmiumsulfid-Halbleiters, einer Zusammensetzung eines Bleisulfid-Halbleiters, einer Zusammensetzung eines Kupferoxid-Halbleiters, einer Zusammensetzung eines Kupfer(I)-oxid-Halbleiters, einer Zusammensetzung eines Eisenoxid-Halbleiters, einer Zusammensetzung eines Eisen(II)-oxid-Halbleiters, einer Zusammensetzung eines Wolframoxid-Halbleiters, einer Zusammensetzung eines Zinkoxid-Halbleiters, einer Zusammensetzung eines Galliumphosphid-Halbleiters, einer Zusammensetzung eines Cadmiumstannid-Halbleiters, einer Zusammensetzung eines Molybdänsulfid-Halbleiters und einer Zusammensetzung eines Kohlenstoffnitrid-Halbleiters einschließt.

17. Verwendung des linearen porösen Titandioxid-Materials gemäß einem der Ansprüche 1 bis 4 auf einem oder mehreren Gebieten aus Lithium-Ionen-Batterie-Materialien, Natrium-Ionen-Batterie-Materialien, KaliumIonen-Batterie-Materialien, katalytischen Hydrierungsmaterialien, photokatalytischem Abbau organischer Schadstoffe, photokatalytischer Zersetzung von Wasser zur Wasserstofferzeugung, Gassensorik, Farbstoff-Solarzellen, Perowskit-Solarzellen, hydrophilen und hydrophoben Materialien und Biomedizin.

## Revendications

1. Matériau poreux linéaire de dioxyde de titane, dans lequel le matériau poreux linéaire de dioxyde de titane présente une structure de phase anatase et une structure monocristalline ;
la structure du matériau poreux linéaire de dioxyde de titane est composée d'une pluralité de particules présentant une direction de croissance orientée,
dans lequel les pores dans la structure poreuse linéaire du matériau poreux linéaire de dioxyde de titane présentent une taille de 5 nm à 20 nm, déterminée au moyen d'une image prise au MET, et
dans lequel le grand axe du monocristal du matériau poreux linéaire de dioxyde de titane est orienté dans la direction <010>.

2. Matériau poreux linéaire de dioxyde de titane selon la revendication 1, dans lequel le matériau poreux linéaire de dioxyde de titane présente une structure d'une ou de plusieurs colonnes rectangulaires qui présentent des surfaces latérales plates qui sont perpendiculaires les unes aux autres.

3. Matériau poreux linéaire de dioxyde de titane selon la revendication 1, dans lequel les surfaces latérales du matériau poreux linéaire de dioxyde de titane sont des plans cristallins {100} et {001} de phase anatase.

4. Matériau poreux linéaire de dioxyde de titane selon la revendication 1, dans lequel le matériau poreux linéaire de dioxyde de titane présente une structure linéaire présentant un diamètre de 20 nm à 5 µm et une longueur de 1 µm à 50 µm ;
de préférence, le matériau poreux linéaire de dioxyde de titane présente une structure linéaire présentant un diamètre de 100 nm à 1 000 nm et une longueur de 5 µm à 20 µm.

5. Procédé de préparation d'un matériau poreux linéaire de dioxyde de titane selon l'une quelconque des revendications 1 à 4, dans lequel le procédé de préparation comprend les étapes consistant à :
disperser une source de titane dans une solution aqueuse d'un peroxyde contenant un composé de lithium sous agitation pour former une solution ; de préférence, la source de titane est une ou plusieurs sélectionnées dans le groupe consistant en l'éthoxyde de titane, le propoxyde de titane, le titanate de tétrabutyle, le glycolate de titane, le glycéroxyde de titane, le sulfate de titane, l'oxysulfate de titane, le tétrachlorure de titane, le tétrafluorure de titane, le fluorotitanate d'ammonium, le nitrure de titane, le dioxyde de titane, l'acide métatitanique, et l'acide orthotitanique ; de préférence le composé de lithium dans la solution aqueuse du peroxyde contenant un composé de lithium est un ou plusieurs sélectionnés dans le groupe consistant en l'hydroxyde de lithium, l'oxyde de lithium, et le peroxyde de lithium ; la concentration du composé de lithium est de 0,4 à 1,0 mol/l ; de préférence dans la solution aqueuse du peroxyde contenant un composé de lithium, le peroxyde est un ou plusieurs sélectionnés dans le groupe consistant en le peroxyde d'hydrogène, le peroxyde d'urée, et l'acide peracétique ; la concentration du peroxyde est de 0,1à 2,0 mol/l ;
soumettre la solution à une réaction de chauffage pour obtenir un peroxyde de titanate de lithium présentant une structure linéaire ; la température de la réaction de chauffage est de 60 à 100 °C ; et la durée de la réaction de chauffage est de 0,5 à 24 heures ;
soumettre le peroxyde de titanate de lithium à un traitement de recuit à basse température pour obtenir un titanate de lithium présentant une structure linéaire ; la température du traitement de recuit à basse température est de 150 °C à 250 °C ; et la durée du traitement de recuit à basse température est de 1 à 24 heures ;
disperser le titanate de lithium dans une solution acide à des fins d'échange d'ions d'hydrogène pour obtenir un acide titanique présentant une structure linéaire ;
soumettre l'acide titanique à un traitement thermique pour obtenir le matériau poreux linéaire de dioxyde de titane ; le traitement thermique inclut une réaction hydrothermique et/ou un recuit à haute température ; la température du recuit à haute température est de 300°C à 1000°C; et la durée du traitement de recuit à haute température est de 1 à 24 heures.

6. Procédé de préparation selon la revendication 5, dans lequel un polymère est ajouté à la solution pendant que la source de titane est dispersée dans une solution aqueuse d'un peroxyde contenant un composé de lithium sous agitation pour former une solution ;
dans lequel le polymère est un ou plusieurs sélectionnés dans le groupe consistant en un chitosane, une gomme de guar, une méthylcellulose, une éthylcellulose, une hydroxyéthylcellulose, une hydroxypropylcellulose, une hydroxypropylméthylcellulose, un polyalcool vinylique, un polyacrylamide, un polyoxyde d'éthylène, un polyéthylèneglycol, et une polyvinylpyrrolidone ;
la fraction en masse du polymère dans la solution est de 100 ppm à 100 000 ppm, plus préférentiellement de 1 000 ppm à 10 000 ppm.

7. Procédé de préparation selon la revendication 5, dans lequel la source de titane est sélectionnée parmi l'acide titanique hydraté ; et l'acide titanique hydraté est obtenu par une réaction d'hydrolyse d'un composé contenant du titane.

8. Procédé de préparation selon la revendication 7, dans lequel le composé contenant du titane est un ou plusieurs sélectionnés dans le groupe consistant en l'éthoxyde de titane, le propoxyde de titane, le titanate de tétrabutyle, le glycolate de titane, le glycéroxyde de titane, le sulfate de titane, l'oxysulfate de titane, le tétrachlorure de titane, le tétrafluorure de titane, et le fluorotitanate d'ammonium ; la réaction d'hydrolyse est effectuée en dispersant le composé contenant du titane dans de l'eau pure à des fins d'hydrolyse directe afin de produire l'acide titanique hydraté ; en variante, la réaction d'hydrolyse est effectuée en dispersant le composé contenant du titane dans une solution aqueuse contenant une substance alcaline à des fins d'hydrolyse afin de produire l'acide titanique hydraté.

9. Procédé de préparation selon la revendication 7, dans lequel l'acide titanique hydraté est obtenu par purification après la réaction d'hydrolyse du composé contenant du titane ; la purification est effectuée pour éliminer les impuretés de type ions afin d'obtenir un acide titanique hydraté présentant une pureté de 97 % ou plus; la purification est effectuée selon une ou plusieurs manières parmi lavage à l'eauséparation par centrifugation, lavage à l'eau-séparation sur membrane, lavage à l'eaufiltration, et dialyse.

10. Procédé de préparation selon la revendication 5, dans lequel l'échange d'ions d'hydrogène inclut :
le lavage et la séparation du titanate de lithium présentant une structure linéaire ;
l'ajout du titanate de lithium séparé présentant une structure linéaire dans une solution acide à des fins d'échange d'ions d'hydrogène afin d'obtenir un acide titanique présentant une structure linéaire, et le lavage de l'acide titanique présentant une structure linéaire avant d'être séparé et séché.

11. Procédé de préparation selon la revendication 10, dans lequel la solution acide est une ou plusieurs sélectionnées dans le groupe consistant en l'acide nitrique, l'acide chlorhydrique, l'acide sulfurique, et l'acide acétique; dans lequel la concentration de la solution acide est de 0,001 à 0,1 mol/l.

12. Procédé de préparation selon la revendication 5, dans lequel la température de la réaction hydrothermique est de 105 à 240 °C ; et la durée de la réaction hydrothermale est de 1 à 48 heures.

13. Procédé de préparation selon la revendication 12, dans lequel le système de la réaction hydrothermique est l'un parmi un système acide, un système neutre, et un système alcalin.

14. Procédé de préparation selon la revendication 5, dans lequel la température du recuit à haute température est de 350 à 1 000 °C.

15. Procédé de modification de la surface d'un matériau poreux linéaire de dioxyde de titane selon l'une quelconque des revendications 1-4 ;
dans lequel la modification de la surface comprend un ou plusieurs parmi un chargement de carbone, un chargement de graphène, un chargement de phosphore noir, un chargement d'oxyde de ruthénium, un chargement d'oxyde de plomb, un chargement d'oxyde de nickel, un chargement de platine métallique, un chargement d'or métallique, un chargement d'argent métallique, et un chargement de cuivre métallique.

16. Procédé de formation d'une composition d'un matériau poreux linéaire de dioxyde de titane selon l'une quelconque des revendications 1-4 avec un semi-conducteur ;
la formation d'une composition avec un semi-conducteur inclut une ou plusieurs parmi une formation d'une composition avec un semi-conducteur avec du sulfure de cadmium, une formation d'une composition avec un semi-conducteur sulfure de cadmium, une formation d'une composition avec un semi-conducteur sulfure de plomb, une formation d'une composition avec un semi-conducteur oxyde de cuivre, une formation d'une composition avec un semi-conducteur oxyde cuivreux, une formation d'une composition avec un semi-conducteur oxyde de fer, une formation d'une composition avec un semi-conducteur oxyde ferreux, une formation d'une composition avec un semi-conducteur oxyde de tungstène, une formation d'une composition avec un semi-conducteur oxyde de zinc, une formation d'une composition avec un semi-conducteur phosphure de gallium, une formation d'une composition avec un semi-conducteur stannure de cadmium, une formation d'une composition avec un semi-conducteur sulfure de molybdène, et une formation d'une composition avec un semi-conducteur nitrure de carbone.

17. Utilisation du matériau poreux linéaire de dioxyde de titane selon l'une quelconque des revendications 1 à 4 dans le domaine d'un ou de plusieurs parmi les matériaux de batterie au lithium-ion, les matériaux de batterie au sodium-ion, les matériaux de batterie au potassium-ion, les matériaux d'hydrogénation catalytique, la dégradation photocatalytique des polluants organiques, la décomposition photocatalytique de l'eau pour la production d'hydrogène, la détection des gaz, les cellules solaires à colorant, les cellules solaires à pérovskite, les matériaux hydrophiles et hydrophobes, et les biomédicaments.
